(19) Europäisches Patentamt
European Patent Office
Office européen des brevets

(11) Publication number: **0 481 280 A2**

# (12) EUROPEAN PATENT APPLICATION

(21) Application number: **91116751.8**

(22) Date of filing: **01.10.91**

(51) Int. Cl.[5]: **B32B 27/06**, C09J 125/08, C09J 133/06

(30) Priority: **16.10.90 US 598264**

(43) Date of publication of application: **22.04.92 Bulletin 92/17**

(84) Designated Contracting States: **BE DE ES FR GB IT NL SE**

(71) Applicant: **THE DOW CHEMICAL COMPANY**
**2030 Dow Center Abbott Road**
**Midland, MI 48640(US)**

(72) Inventor: **Keskey, William**
**3872 Marilyn**
**Midland, MI 48642(US)**
Inventor: **Camisa, John D.**
**4212 Brambleridge**
**Midland, MI 48640(US)**
Inventor: **Meath, Ken R.**
**2502 E. Sugnet**
**Midland, MI 48642(US)**

(74) Representative: **Casalonga, Alain et al**
**BUREAU D.A. CASALONGA - JOSSE**
**Morassistrasse 8**
**W-8000 München 5(DE)**

## (54) Composite board, containing certain latex binder compositions.

(57) Polymeric latexes with a relatively high $T_g$ and particle sizes greater than 1400 Angstroms can be used in whole or in part as a binder to produce strong composite board that will substantially resist sagging under conditions of high temperature and humidity.

EP 0 481 280 A2

This invention relates to relatively large particle size latexes useful as a binders for inorganic and cellulosic composite boards.

Starch is well known in the art as a binder for composite boards such as ceiling tile. However, under certain environmental conditions, like increased temperature and humidity, the boards lose dimensional stability. For example, ceiling tile made with starch acting as the binder sags. At the same time, the board is also required to have adequate strength, that is, a good modulus of rupture, to be able to withstand normal handling and use. It is a problem in the art that some binder latexes do not impart the same degree of strength to the board that starch can impart.

U.S. Patent No. 4,587,278 teaches the use of soft latexes with glass transition temperatures lower than room temperature, less than about 25°C, as binders for ceiling boards. U.S. Patent No. 4,863,979 teaches the use of latexes having relatively high glass transition temperatures, greater than about 80°C, as binders for latexes in ceiling board; the higher glass transition temperature latex enables a ceiling board to retain strength and resist sag in humid environments to a greater extent than relatively soft latexes.

Accordingly, it would be advantageous to have available a high glass transition temperature latex which imparts great strength to the ceiling board without sacrificing sag resistance.

The present invention relates to a composite board composition containing a binder and materials selected from inorganic and cellulosic materials, the binder comprising an aqueous dispersion of copolymer particles produced by polymerizing a group of monomers selected from the groups consisting of:

i) a monovinylidene monomer, an aliphatic conjugated diene and an $\alpha,\beta$-ethylenically unsaturated carboxylic acid;

ii) two or more esters of ethylenically unsaturated carboxylic acids, one of which has a homopolymer with a $T_g$ less than 25°C and the other of which has a homopolymer with a $T_g$ of greater than 80°C and an $\alpha,\beta$-ethylenically unsaturated carboxylic acid; and

iii) a monovinylidene compound; an ester of an $\alpha,\beta$-ethylenically unsaturated carboxylic acid with a $T_g$ of less than 25°C and an $\alpha,\beta$-ethylenically unsaturated carboxylic acid;

whereby the $T_g$ of the copolymer is greater than 80°C and the particle size of the copolymer is greater than 1400 Angstroms, the resulting composite board has a modulus of rupture of at least 130 psi as measured by ASTM 367-78 and whereby upon exposing a 1 1/2 X 6 inch (3.8 x 15 cm) strip of the composite board to 90 percent relative humidity at 94°F (34°C) for 96 hours the composite board sags less than 0.8 mm.

Accordingly, the present invention is a high glass transition temperature latex which imparts great strength to composite compositions such as a ceiling board without sacrificing sag resistance. Surprisingly, this is accomplished in part by significantly increasing the particle size of the latex.

The present invention is directed toward such a large particle size latex and to the composite board containing the latex. The binder for the board comprises a latex of a copolymer, the copolymer having a glass transition temperature ($T_g$) greater than 80°C and a particle size of greater than 1400 Angstroms, preferably greater than 1800 Angstroms, such that the resulting composite board has sufficient strength for necessary handling and use and maintains dimensional stability with increased temperature and humidity.

What is meant by "dimensional stability" is a lack of movement of the composite board when exposed to increased temperature and humidity. Dimensional stability can be measured by evaluating sag resistance of the composite board. Sag resistance is determined by exposing about a $1\frac{1}{2}$ x 6-inch (3.8 x 15 cm) strip of composite board of the composition as described in Example 1 to 94°F (34°C), 90 percent relative humidity for 96 hours, holding 330 g of weight and then measuring the displacement of the center of the board in millimeters (mm). Preferably, the composite board will sag 1.0 mm or less, more preferably less than 0.8 mm and most preferably less than 0.5 mm.

What is meant by "strength" is that the resulting composite board of the composition has the integrity necessary to withstand handling, processing and other forces that are applied to the composite board. The necessary strength can then be determined by preparing a board by the procedure and of the composition as described in Example 1. The resulting cellulosic composite board has a modulus of rupture (MOR) of at least 300 psi as measured by ASTM 367-78. More preferably, the calculated MOR of the resulting composite board will be at least 310 psi. The most preferred MOR will be at least 320 psi.

MOR is calculated from the standard 3 point breaking loading test described in ASTM 367-78 as follows:

Modulus of Rupture (MOR) = $3\ PL/bd^2$

where:

P = peak force required to break the sample (lb)

L = span between the sample supports (in)

b = width of the sample (in)
d = thickness of the sample.

This modulus of rupture is corrected for density variation as shown:

MOR corrected = (MOR) $D^2$

where D is the density correction
D = desired density/actual density

The glass transition temperature of the copolymer of latex of the present invention is defined functionally such that the $T_g$ is sufficient when the resulting composite board maintains dimensional stability when exposed to specific environmental conditions and the resulting composite board has a modulus of rupture of at least 300 psi as measured by ASTM 367-78. The properties of the board are directly correlated to the particle size of the latex and the Tg of the latex used as the binder in the ceiling board. The preferred $T_g$ of the latex polymer having a particle size of greater than 1400 Angstroms preferably greater than 1800 Angstroms, is at least 80° C. The more preferred range is between 80° C and 120° C. The most preferred range is between 85° C and 120° C.

The physical properties of the latex are correlated to the ceiling board properties on a sliding scale. The relationship can be exemplified as follows: if the $T_g$ of the latex polymer is above 80° C, preferably around 95° C for a conventionally sized latex copolymer, that is a latex having a particle size of less than 1400 Angstroms preferably less than 1800 Angstroms, then the board resists sag and retains adequate strength when compared to starch and some other latexes. If the same sized latex is prepared to have a $T_g$ less than 80° C, then the board decreases in sag resistance. However, if the particle size of the latex is greater than 1400 Angstroms, preferably greater than 1800 Angstroms, and the $T_g$ of the polymer is greater than 80° C, the board strength can be increased without sacrificing sag resistance.

The particle sizes of the present invention are greater than 1400 Angstroms. The more preferred particle sizes of the present latexes are between 1800 and 3200 Angstroms. The most preferred particle size is within the range of from 1800 to 2500 Angstroms.

The latex particle sizes for boards which do not contain cellulosic materials (newsprint for example) have optimum particle sizes of from 1800 Angstroms to 2200 Angstroms. The latex particle sizes for boards which do contain cellulosic materials have optimum particle sizes of from 1400 Angstroms to 2200 Angstroms.

The latex copolymer composition of this invention can be prepared by a conventional emulsion polymerization process in aqueous medium with conventional additives. Typically, the aqueous phase will contain from 0.5 to 5 weight percent (based on the monomer charge) of conventional nonionic or anionic emulsifiers (for example, potassium, N-dodecyl sulfonate, sodium isooctobenzene sulfonate, sodium laurate, nonyl phenol ethers of polyethylene glycols).

Conventional emulsion polymerization catalysts can be employed in the foregoing latex polymerization and common examples thereof include peroxides, persulfates, azo compounds such as sodium persulfate, potassium persulfate, ammonium persulfate, hydrogen peroxide, azodiisobutyric diamide as well as catalysts (for example, redox catalysts) which are activated in the water phase (for example, by a water-soluble reducing agent). The type and amount of catalyst, as well as the particular polymerization conditions employed, will typically depend on the other monomers which are used and polymerization conditions will be generally selected to favor the polymerization of such other monomers. Typically, such catalysts are employed in a catalytic amount ranging from 0.01 to 5 weight percent based upon the monomer weight. In general, the polymerization is conducted at a temperature in the range of from -10° to 110° C (preferably from 50° to 90° C).

Similarly, conventional chain transfer agents such as, for example, n-dodecyl mercaptan, bromoform, carbon tetrachloride can also be employed in the normal fashion in polymerization to regulate the molecular weight of the polymer formed therein. Typically, when such chain transfer agents are used, they are employed in amounts ranging from 0.01 to 10 (preferably from 0.1 to 5) weight percent based upon the weight of the monomers employed in the polymerization. The amount of chain transfer agent employed depends somewhat on the particular transfer agent employed and the particular monomers being polymerized.

Similarly, conventional crosslinking agents, which can be a di-, tri- or tetra-vinyl compound, can also be employed in the normal fashion in polymerization to regulate the $T_g$ and the molecular weight of the polymer formed therein. Representative examples of a crosslinking agent are a divinylbenzene, allyl methacrylate or a mono-, di-, tri- or tetra- ethylene glycol diacrylate or dimethacrylate. Typically, when such crosslinking agents are used, they are employed in amounts ranging from 0.01 to 4.0 (preferably from 0.1 to

1.0) weight percent based upon the weight of the monomers employed in the polymerization. The amount of crosslinking agent employed depends on the monomers being polymerized.

Particularly, the latex composition with a sufficient $T_g$ can be prepared with a combination of hard monomer and soft monomer. An $\alpha,\beta$-ethylenically unsaturated carboxylic acid may also be incorporated.

The term "hard monomer" is meant to include a monomer which homopolymer has a $T_g$ of at least 80 ° C and by the term "soft monomer" is meant a monomer which homopolymer has a $T_g$ less than 35 ° C. Typical hard monomers are those conventionally known in the art, for example, styrene and methyl methacrylate. Soft monomers are also conventionally known in the art and can be, for example, butadiene, ethyl acrylate or butyl acrylate.

The $\alpha,\beta$-ethylenically unsaturated carboxylic acids include compositions of the formula:

$$\begin{array}{c} R' \\ | \\ RCH{=}C{-}COOH \end{array}$$

where

R is H and R' is H, $C_1$-$C_4$ alkyl, or $-CH_2COOX$;

R is -COOX and R' is H or $-CH_2COOX$; or,

R is $CH_3$ and R' is H; and

X is H or $C_1$-$C_4$ alkyl.

Suitable $\alpha,\beta$-ethylenically unsaturated aliphatic carboxylic acids are monoethylenically unsaturated monocarboxylic, dicarboxylic and tricarboxylic acids having the ethylenic unsaturation alpha-beta to at least one of the carboxyl groups and similar monomers having a higher number of carboxyl groups. It is understood that the carboxyl groups may be present in the acid or salt form (-COOM in which M represents hydrogen or a metal, such as, for example, sodium or potassium) and are readily interconvertible by well known simple procedures.

Specific examples of the $\alpha,\beta$-ethylenically unsaturated aliphatic carboxylic acids are acrylic acid, methacrylic acid, fumaric acid, itaconic acid, maleic acid and aconitic acid.

The latex composition will typically include a hard monomer content from 50 to 99 weight percent and the soft monomer content will be in an amount from 1 to 50 weight percent. The carboxylic acid level may be from 0 to 20 weight percent. Preferably, the hard monomer is present in an amount from 65 to 95 weight percent, the soft monomer is present in an amount from 5 to 35 weight percent and the carboxylic acid is present in an amount from 0.5 to 10 weight percent.

A particular copolymer family suitable for the latex of the present invention is a copolymer comprising a monovinylidene monomer and an aliphatic conjugated diene. Normally, an $\alpha,\beta$-ethylenically unsaturated carboxylic acid termonomer is incorporated into the polymer.

The term "monovinylidene" monomer is intended to include those monomers wherein a radical of the formula:

$$\begin{array}{c} R \\ | \\ CH_2{=}C{-} \end{array}$$

(wherein R is hydrogen or a lower alkyl such as an alkyl having from 1 to 4 carbon atoms) is attached directly to an aromatic nucleus containing from 6 to 10 carbon atoms, including those wherein the aromatic nucleus is substituted with alkyl or halogen substituents. Typical of these monomers are styrene, a-methylstyrene, ortho-, meta- and para-methylstyrene; ortho-, meta- and paraethylstyrene; o,p-dimethylstyrene; o,p-diethylstyrene; isopropylstyrene; o-methyl-p-isopropylstyrene; p-chlorostyrene; p-bromo-styrene; o,p-dichlorostyrene; o,p-dibromostyrene; vinylnaphthalene; diverse vinyl (alkylnaphthalenes) and vinyl (halonaphthalenes) and comonomeric mixtures thereof.

"Acyclic aliphatic conjugated dienes" usefully employed herein include typically those compounds which have from 4 to 9 carbon atoms, for example, 1,3-butadiene, 2-methyl-1,3-butadiene; 2,3-dimethyl-1,3-butadiene; pentadiene; 2-neopentyl-1,3-butadiene and other hydrocarbon analogs of 2,3-butadienes, such as 2-chloro-1,3-butadiene; 2-cyano-1,3-butadiene, the substituted straight chain conjugated pentadienes, the

straight chain and branched chain conjugated hexadienes, other straight and branched chain conjugated dienes having from 4 to 9 carbon atoms, and comonomeric mixtures thereof. The 1,3-butadiene hydrocarbon monomers such as those mentioned hereinbefore provide interpolymers having particularly desirable properties and are therefore preferred. The cost, ready availability and the excellent properties of interpolymers produced therefrom makes 1,3-butadiene the most preferred acyclic aliphatic conjugated diene.

Another family of suitable copolymers is a copolymer of a monovinylidene compound (as defined above) and an ester of an $\alpha,\beta$-ethylenically unsaturated carboxylic acid (as defined below) with a $T_g$ of less than 25° C. An $\alpha,\beta$-ethylenically unsaturated carboxylic acid termonomer can also be incorporated into the polymer.

Esters of $\alpha,\beta$-ethylenically unsaturated carboxylic acid useful herein as soft monomers include typically soft acrylates (that is , those with homopolymers having a $T_g$ of less than 25° C) such as benzyl acrylate, butyl acrylate, sec-butyl acrylate, cyclohexyl acrylate, dodecyl acrylate, hydroxyethyl acrylate, hydroxypropyl acrylate, ethyl acrylate, 2-ethylbutyl acrylate, 2-ethylhexyl acrylate, heptyl acrylate, hexylacrylate, isobutyl acrylate, isopropyl acrylate, methyl acrylate, propyl acrylate, and soft methacrylates such as butyl methacrylate, and hexyl methacrylate. The cost, availability and known properties of butyl acrylate and ethyl acrylate make these monomers preferred among the acrylates.

Still a third family of copolymers useful in the latex of the present invention comprises a copolymer of two or more esters of ethylenically unsaturated carboxylic acids, one of which has a homopolymer with a $T_g$ less than 25° C and the other of which has a homopolymer with a $T_g$ of greater than 80° C, as defined above, such as methyl methacrylate and ethyl acrylate. The copolymer can also include a termonomer of an $\alpha,\beta$-ethylenically unsaturated carboxylic acid.

Esters of $\alpha,\beta$-ethylenically unsaturated carboxylic acids having a homopolymer which $T_g$ is greater than 80° C typically include hard methacrylates such as tert-butyl methacrylate, isopropyl methacrylate methyl methacrylate and mixtures thereof. The cost, availability and known properties of methyl methacrylate make it preferred among the methacrylates.

Additional monomers, including those described above, can be added to any of the families of copolymers described above. Other monomers which can be added to any of the families of copolymers include termonomers having homopolymers with an intermediate $T_g$ of greater than about 25° C but less than 80° C such as: 4-biphenyl acrylate, tert-butyl acrylate, vinyl acetate, sec-butyl methacrylate, cyclohexyl methacrylate, ethyl methacrylate, isobutyl methacrylate, propyl methacrylate, isobutyl methacrylate, n-propyl methacrylate and tert-butyl amino ethyl methacrylate.

The composite board, for example, a ceiling tile, can be prepared by any conventional process. Examples include water-felted formed on a Fourdrinier, water-borne (slurried in water) or cast molded.

The inorganic and cellulosic materials of the composite are conventionally known fillers and fibers. For example, mineral wool (inorganic fiber), perlite or clay (inorganic fillers) and cellulose (cellulosic material). Therefore, the boards can be prepared with formulations comprising either cellulosic or non-cellulsoic materials, or mixtures thereof.

In a typical formulation, typical amounts of the binder are from about 1 to about 25 percent by weight; the cellulosic material, from about 5 to about 50 percent by weight; the inorganic fiber, from about 10 to about 70 percent by weight; and the inorganic filler, from about 5 to about 90 percent by weight, based upon the total weight of the composite board.

The binder system is not limited exclusively to the latex. Latex may be one part of the binder system. A desirable binder system is latex plus starch.

Ceiling tile is prepared by dispersing newsprint and mixing the dispersion with binder material (latex or latex and starch), inorganic and cellulosic material. Flocculant is added and the resultant furnish is poured into a mold, diluted and drained. The resultant wet mat is then pressed and dried.

The invention is further illustrated, but is not limited by the following examples wherein all parts and percentages are by weight unless otherwise specified.

## Example 1

A styrene/ ethyl acrylate/ acrylic acid latex having the same monomeric ratios but various particle sizes (to show the increase in advantageous properties achieved with the larger particle size latexes) and a $T_g$ of about 95° C was prepared by conventional polymerization methods.

The latex was then incorporated as the binder into ceiling tiles in the following manner:

Printed newsprint was dispersed in water at 2.0 percent solids. A Cowles blade was used with an air stirrer at high rpm to redisperse the cellulose to a Canadian Standard Freeness of 250-300 mls. Water (4,400 g); perlite (72.1 g); mineral wool (30.1 g); and the dispersed newsprint (34.9 g) were mixed for three

minutes with moderate agitation using a Cowles blade. Latex (12.8 g of polymer) was added and the slurry was mixed for 30 seconds. Flocculant (cationic polyacrylamide) was added until the latex was completely flocculated (determined by the point when the water becomes clear). Flocculation was carried out with less than moderate agitation. The flocculated furnish was poured into a Williams Sheet mold apparatus and was diluted to approximately 1.0 percent solids. The furnish was dispersed and drained on a retaining wire. The wet mat was pressed to a thickness of 630 mils and dried at 375° to 400°F (190°C to 204°C) in a forced air oven. The resulting board was approximately 7.5 x 7.5 inches (19 x 19 cm), had a thickness of about 0.7 inches (1.8 cm) and a density of about 12 lbs/$ft^3$ (0.19 g/$cm^3$).

TABLE I

| Ceiling Board Evaluation | | | |
|---|---|---|---|
| Example | Binder Particle Size -in Angstroms | MOR | Sag inches (cm) |
| 1 | 1540 | 336 | .027 (.069) |
| 2 | 2130 | 384 | .022 (.056) |
| 3 | 3170 | 360 | .023 (.058) |
| Comparative A | 750 | 307 | .024 (.061) |
| Comparative B | 1060 | 299 | .021 (.053) |
| Comparative C | Starch | 290 | 1.08 (2.74) |

The table above illustrates the high MOR (high strength) which starch imparts as a binder to ceiling tile but the starch imparts little or no sag resistance. The ceiling tile made with the latex binder having a small particle size, ie. less than about 1800 Angstroms shows good sag resistance but a relatively low MOR (less strength) compared to the larger particle sized latexes.

The latex binders of the invention have both excellent strength (high MOR) and retain sag resistance, i.e., an MOR of at least 300 psi and a sag of 1 mm or less.

Example 2

A styrene/ ethyl acrylate/ acrylic acid latex having the same monomeric ratios but particle sizes of 900 and 2100 Angstroms and a $T_g$ of about 95°C was prepared by conventional polymerization methods. The 900 Angstrom latex was a comparative Example to demonstrate the advantages of the larger particle size latex.

The latex was then incorporated as the binder into ceiling tiles in the following manner:

Water, (4,000 g); perlite, (18.0 g); mineral wool, (100.5 g); (180.00 g) of a 5 percent solution of starch in water by weight and clay (9.0 g) were mixed using a Cowles blade. 30 Grams of latex (about 13.8 g of polymer) was added and the slurry was mixed for 30 seconds. Flocculant (cationic polyacrylamide) was added until the latex was completely flocculated (determined by the point when the water becomes clear). Flocculation was carried out with less than moderate agitation. The flocculated furnish was poured into a Williams Sheet mold apparatus and was diluted to approximately 1.0 percent solids. The furnish was dispersed and drained on a retaining wire. The wet mat was pressed to a thickness of 630 mils and dried at 375° to 400°F (190° to 204°C) in a forced air oven. The resulting board was approximately 7.5 x 7.5 inches (19 x 19 cm), had a thickness of about 0.6 inches (1.5 cm) and a density of approximately 15 lbs/$ft^3$ (0.24 g/$cm^3$).

TABLE II

| Ceiling Board Evaluation | | | |
|---|---|---|---|
| Example | Binder Particle Size -in Angstroms | MOR | Sag inches (cm) |
| 2 | 2100 | 130 | .04 (.1) |
| Comparative 2A | 900 | 104 | .07 (.18) |

## Claims

**1.** A composite board composition containing a binder and materials selected from inorganic and cellulosic materials, the binder comprising an aqueous dispersion of copolymer particles produced by polymerizing a group of monomers selected from the groups consisting of:

i) a monovinylidene monomer, an aliphatic conjugated diene and an $\alpha,\beta$-ethylenically unsaturated carboxylic acid;

ii) two or more esters of ethylenically unsaturated carboxylic acids, one of which has a homopolymer with a $T_g$ less than 25 ° C and the other of which has a homopolymer with a $T_g$ of greater than 80 ° C and an $\alpha,\beta$-ethylenically unsaturated carboxylic acid; and

iii) a monovinylidene compound; an ester of an $\alpha,\beta$-ethylenically unsaturated carboxylic acid with a $T_g$ of less than 25 ° C and an $\alpha,\beta$-ethylenically unsaturated carboxylic acid;

whereby the $T_g$ of the copolymer is greater than 80 ° C and the particle size of the copolymer is greater than 1400 Angstroms, the resulting composite board has a modulus of rupture of at least 130 psi as measured by ASTM 367-78 and whereby upon exposing a 1 1/2 X 6 inch (3.8 x 15 cm) strip of the composite board to 90 percent relative humidity at 94 ° F (34 ° C) for 96 hours the composite board sags less than 0.8 mm.

**2.** The composition of Claim 1 wherein the particle size of the copolymer is greater than 1800 Angstroms and the composite modulus of rupture is at least 140 psi.

**3.** The composition of Claim 1 wherein the copolymer composition of the latex is produced by polymerizing a group of monomers selected from the the groups consisting of: i) styrene, butadiene, and an $\alpha,\beta$-ethylenically unsaturated carboxylic acid monomer; ii) methyl methacrylate, ethyl acrylate and/or butyl acrylate and an $\alpha,\beta$-ethylenically unsaturated carboxylic acid monomer; iii) styrene, ethyl acrylate and/or butyl acrylate and an $\alpha,\beta$-ethylenically unsaturated carboxylic acid monomer.

**4.** The composition of Claim 3 wherein the copolymer comprises styrene, ethyl acrylate and acrylic acid.

**5.** The composition of Claim 1 wherein the copolymer of ii or iii comprises a hard monomer having as a homopolymer a $T_g$ of at least about 80 ° C, and a soft monomer having as a homopolymer a $T_g$ less than 35 ° C, wherein the hard monomer is present in an amount from 50 to 99 weight percent and the soft monomer is present in an amount from 1 to 50 weight percent.

**6.** The composition of Claim 1 wherein the copolymer is comprised of from 50 to 99 percent by weight methyl methacrylate, from 1 to 50 percent by weight ethyl acrylate and fumaric acid up to 20 weight percent.

**7.** The composition of Claim 1 wherein the copolymer comprises styrene in an amount of from 50 to 99 weight percent, ethyl acrylate in an amount of from 1 to 50 weight percent and acrylic acid up to 20 weight percent.

**8.** The composition of Claim 1 wherein the inorganic materials are mineral wool, perlite or clay, the cellulosic material is cellulose, and the binder comprises latex and starch.